# EUROPEAN PATENT SPECIFICATION

(11) **EP 2 145 098 B1**
(45) Date of publication and mention of the grant of the patent: **05.01.2011**
(21) Application number: 07794286.0
(22) Date of filing: 01.05.2007
(51) Int. Cl.: F02M 37/08, F04C 11/00, F04D 13/06, F04D 29/58

(54) **NOVELTY IN ELECTRIC FUEL PUMPS FOR INTERNAL COMBUSTION ENGINES**
NEUHEIT BEI ELEKTRISCHEN KRAFTSTOFFPUMPEN FÜR BRENNKRAFTMASCHINEN
POMPES À CARBURANT À COMMANDE ÉLECTRIQUE POUR MOTEURS À COMBUSTION INTERNE INNOVANTES

(43) Date of publication of application: 20.01.2010
(73) Proprietor: Superpar Otomotiv San. Ve Tic. A.S., Ankara Karayolu 24. Km. Kemalpasa 35170 Izmir (TR)
(72) Inventor: TARANCIOGLU, Mehmet Feyyaz, 35170 Izmir (TR)
(74) Representative: Iskender, Ibrahim
(86) International application number: PCT/TR2007/000041
(87) International publication number: WO 2008/133600

(56) References cited:
- EP-A- 0 264 556
- EP-A- 1 324 465
- WO-A-01/59288
- DE-A1- 2 303 687
- US-A- 4 998 865
- US-A- 5 120 201

## Description

### TECHNICAL FIELD

The invention relates to the electric fuel pumps for internal combustion engines.

The invention relates particularly to a method and a mechanism for introducing a cheap single-phase brushless dc fuel pump which eliminates the wear problems of the brushed dc systems and the cost problems of the three-phase brushless dc systems.

### BACKGROUND ART

Today, to increase efficiency of the fuel pumps on vehicle, various electric fuel pumps have been manufactured. Electric fuel pumps for internal combustion engines have long been known and used. About internal combustion engines there have been many applications at present, one of these applications is US 5,120,201 A1 numbered patent application and it relates fuel delivery systems for internal combustion engines, and more particularly to a self-contained electric-motor fuel pump for use therein,. Particularly said application includes statements as subjacent "A self-contained brushless electric-motor fuel pump for internal combustion engine fuel delivery systems and like applications in accordance with the present invention comprises a housing having a fuel inlet and fuel outlet, and a brushless electric motor with a permanent magnet armature mounted for rotation within the housing and stator windings surrounding the armature within the housing. A pump mechanism is operatively positioned between the fuel inlet and outlet, and is coupled to the armature for corotation with the armature within the housing to pump fuel under pressure from the inlet to the outlet."

Another application which relates electric fuel pumps is US 4,728,264 numbered patent application and it discloses a fuel delivery system in which a direct current motor fuel pump delivers fuel under pressure from a supply tank to an engine. A pressure sensitive switch, which may be contained within unitary pump/motor housing, is responsive to fuel pump output pressure for applying a pulse width modulated direct current signal to the pump motor, and thereby controlling pump operation so as to maintain constant pressure in the fuel delivery line to the engine independently of fuel demand.

Conventional permanent magnet direct current (PMDC) motors are traditionally designed with relatively inexpensive commutating parts comprising a commutator and a brush system. For many specific applications these brushed dc motors will keep their importance, especially at the lower end of the applications range.

Carbon brushes and copper or graphite commutators wear out due to chemical attack by a variety of alternative fuels or fuel combinations. Higher spring forces applied to the brushes to overcome the effect of engine vibrations cause rapid wearing out of the brushes and commutator. Particles ripped from the brushes and commutator and carried by the fuel to the fuel system cause problems in the ever decreasing injector nozzle diameters of high pressure fuel injectors.

Because of these cases some electric fuel pump manufacturers have launched attempts to design and build brushless dc electric motors to overcome problems associated with the brush / commutator contact wear. EP No 1324474 A2 discloses a brushless direct current motor -and more particularly, but not exclusively such a motor- for use in conjunction with a fuel pump. All attempts so far have remained within a three-phase controller system.

Three-phase controllers are designed and built based on two systems. Systems with sensors require three hall-effect switches in order to be able to detect the rotor position. So called sensorless systems do not use sensors but sophisticated algorithms, which require microprocessors in order to be able to perform the massive mathematical operations required to detect the rotor position. Both systems need to use six power transistors to energize the stator coils in a certain sequence. Therefore using a three-phase motor in a small fuel pump cause cost increase.

The complexity of components and algorithms to control and drive a three-phase motor in a small fuel pump and the cost that has to be paid for this much sophistication has prevented three-phase brushless fuel pump designs to find widespread OEM use. They have remained as fancy aftermarket items addressing motorists, who are seeking state of the art gadgets regardless of the cost.

As a result, the presence of the need of introducing a cheap single-phase brushless dc fuel pump due to many advantages it provides and the insufficiency of the existing solutions have made it necessary to perform an improvement in the relevant technical field.

### SUMMARY OF THE INVENTION

The present invention relates to the electric fuel pumps for internal combustion engines as a method, which fulfills a foresaid requirement, eliminates all the disadvantages and provides some additional advantages.

Based on the state of the background art, the main object of this invention is to eliminate the wear problems of the brushed dc systems and the cost problems of the three-phase brushless dc systems by introducing a cheap single-phase brushless dc fuel pump.

Another object of the invention is to overcome the problems which have limited the use of single-phase brushless systems to air moving devices and make it possible to use them on a more challenging field like fuel pumps.

With this invention it has been made possible to introduce brushless fuel pumps into the engine industry as cheap reliable solutions.

Another object of this invention is to match the life of the inlet filter with the highly extended motor life by introducing a serviceable filter element. The serviceable filter element is used for the first time in the electric fuel pump industry.

Yet another object of this invention is to use an unserviceable secondary filter element inside the fuel pump to catch debris which has managed to pass the serviceable primary filter for a variety of reasons.

By using a serviceable primary filter and an unserviceable secondary filter, it has been made possible to have a very long pump life which is not limited by the filter life and protect precision pump elements against any kind of misuse or abuse.

Yet another object of this invention is to facilitate manufacturing and assembly of the complete unit by designing the driving and driven components in two completely independent subassemblies and clamping them together with an axial movement. The two subassemblies are brought to the same axis and locked to each other by the mating surfaces.

Through clever design and assembly techniques cost has been kept low because cost is as important for manufacturers of OEM equipment as quality.

In order to achieve all the aforesaid advantages, which will also become apparent from the following detailed description, the present invention brings together many conveniences depending on its said features.

The structural and characteristic features and all the advantages of the invention will become clearer from the enclosed drawings and the following detailed description where reference is being made to said drawings, thus the evaluation must be based on these drawings and the detailed description.

### BRIEF DESCRIPTION OF THE DRAWINGS

In order to best understand the embodiment of the present invention and the advantages thereof together with the supplemental elements, it must be considered along with the drawings for which the description is provided herein below.
Figure 1; is an exploded view of the complete fuel pump.
Figure 2; is a block diagram of the fuel flow of the current invention.
Figure 3; is a block diagram of the fuel flow of the prior art.
Figure 4; is a schematic diagram of a single-phase brushless dc commutation circuit.
Figure 5; is a schematic diagram of a two-phase brushless dc commutation circuit.
Figure 6; is a schematic diagram of a three-phase brushless dc commutation circuit.
Figure 7; is a schematic view of the filter system of the prior art.
Figure 8; is a schematic view of the filter system of the current invention.
Figure 9; is an exploded view of the driven subassembly.
Figure 10; is an exploded view of the driving subassembly.
Figure 11; is a perspective view of the driven and driving subassemblies prior to final assembly.
Figure 12 and Figure 13 are two perspective views of the motor rotor.

### REFERENCE NUMBERS

- **1.**: Pump housing
- **2.**: Fuel inlet
- **3.**: Moulded inlet cover
- **4.**: Serviceable primary filter
- **5.**: Plug
- **6.**: Electrical terminals
- **7.**: Electromagnetic interference filter
- **8.**: Secondary filter
- **9.**: Card housing
**9.1** Openings
- **10.**: Commutation circuit
- **11.**: Centring
- **12.**: Stator moulded insulator
- **13.**: Stator
- **14.**: Stator end insulator
- **15.**: Self tapping screws
- **16.**: Retainer
- **17.**: Washer
- **18.**: Magnet rotor
- **19.**: Spacer
- **20.**: Torsional spring coupling
- **21.**: Moulded coupling
- **22.**: Pump element
- **23.**: Pump element
- **24.**: Pump element (Pump rotor)
- **25.**: Pump element
- **26.**: Pump element
- **27.**: Spring
- **28.**: Pressure relief valve
- **29.**: Fixed shaft
- **30.**: Pump carrier
- **31.**: Protrusion
- **32.**: Indentations
- **33.**: The hole
- **34.**: Extension
- **35.**: Fuel outlet
- **36.**: Stator coil
- **37.**: Unserviceable inlet filter

### DETAILED DESCRIPTION OF THE INVENTION

In the following detailed description, the method and mechanism for introducing a cheap single-phase brushless dc fuel pump is explained only to enable better understanding of the subject, without any restricting effect.

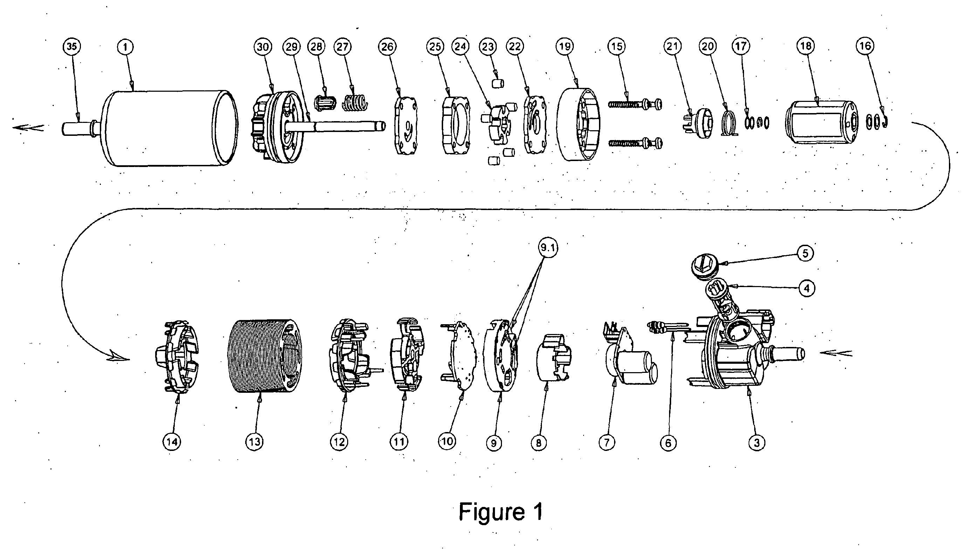

A first preferred embodiment of the fuel pump according to the present invention referring now in detail to the drawings and initially figure 1.

In the exploded view of the complete fuel pump shown in figure 1, there are a fuel inlet (2), a fuel outlet (35) and all elements which are lubricated and cooled by any type of fuel or combination of fuels transferred from the inlet (2) to the outlet (35). Moulded inlet cover (3) houses, serviceable primary filter (4), plug (5), electrical terminals (6), electromagnetic interference filter (7) and secondary filter (8).

Fuel is drawn into the moulded inlet cover (3) through fuel inlet (2), passes through serviceable primary filter (4), around electromagnetic interference filter (7), and through secondary filter (8). Fuel is then directed towards the heat sinks of the power transistors through a variety of openings (9.1) on circuit housing (9) for an efficient cooling.

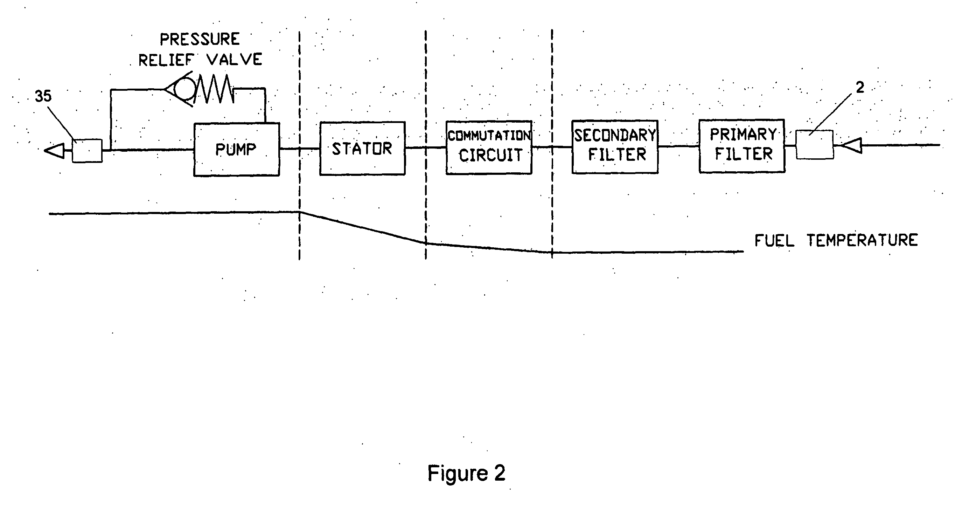

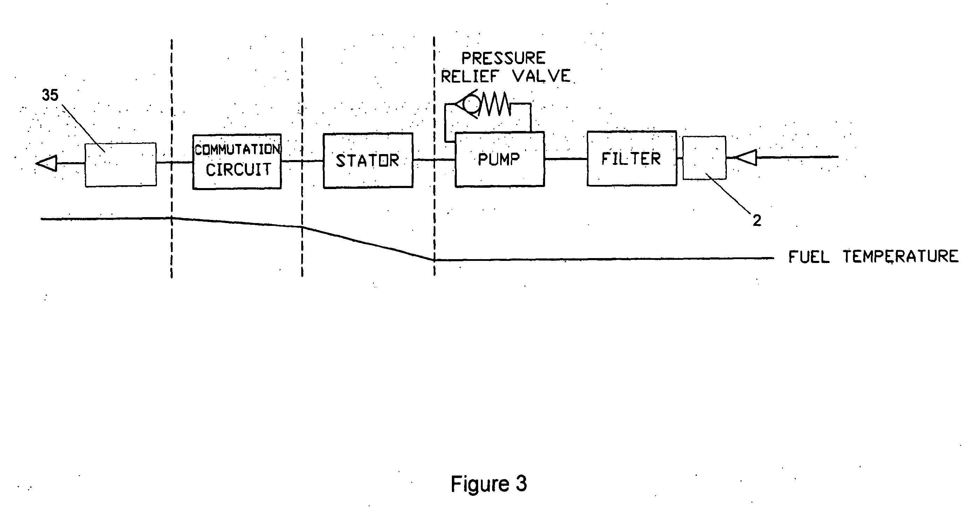

Attention must be drawn to the fuel flow path of the current invention in figure 2. Contrary to the fuel flow path of the prior art shown in figure 3 where the commutation circuit (10) is downstream of the stator (13) thus coming into contact with fuel heated by the stator coils (36), the fuel flow path in the current invention is so designed as to cool the delicate electronic circuit (10) by the cool incoming fuel first and then directing the fuel into the stator coils (36) which are less prone to high temperature. The clever design of the fuel path of the current invention makes it a superior product over the prior art by increasing the operating temperatures considerably to where it is impossible for the prior art to operate.

Said commutation circuit (10) is not sealed in a hermetic housing but coated with a conformal coating varnish which permits very high heat transfer rate not only from metal heat sinks but also from the electronic components' cases. On the other hand said commutation circuit (10) monitors fuel temperature and responds to subzero temperatures by increasing its power output as the fuel temperature decreases.

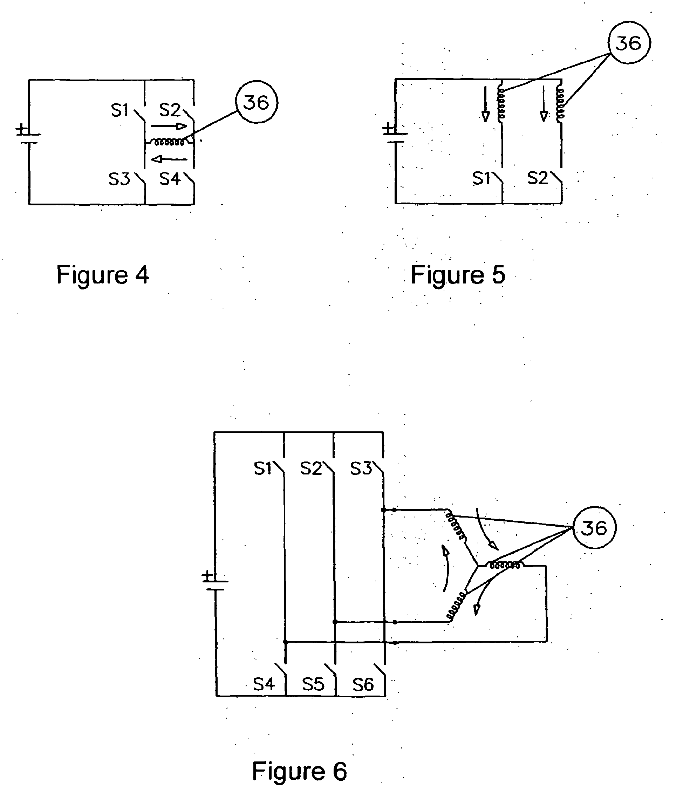

In Figures 4,5 and 6 it's shown how single-phase, two-phase and three-phase systems operate respectively. In a single-phase system as in figure 4, a single coil (36) is energized in alternative directions. As there is only one coil (36) energized alternately by every driver signal, the power output /copper ratio is highest.

In a two-phase system as shown in figure 5, there are two coils (36) wound in opposite directions. These coils (36) are energized alternatively by the commutation circuit (10). In this driving topology, the power output /copper ratio is 1/2 of the single-phase system. As this system requires fewer switches (S1, S2) than the single-phase system, it is preferred for very low power densities where power output/copper ratio is negligible.

In a three-phase system as shown in figure 6, two of the three coils (36) are energized at a time, thus making the power output/copper ratio 2/3 of the single-phase system. As three phase systems require 6 switches (S1, S2, S3, S4, S5, S6) to operate they are preferred for bidirectional applications where switching cost is justified by the application.

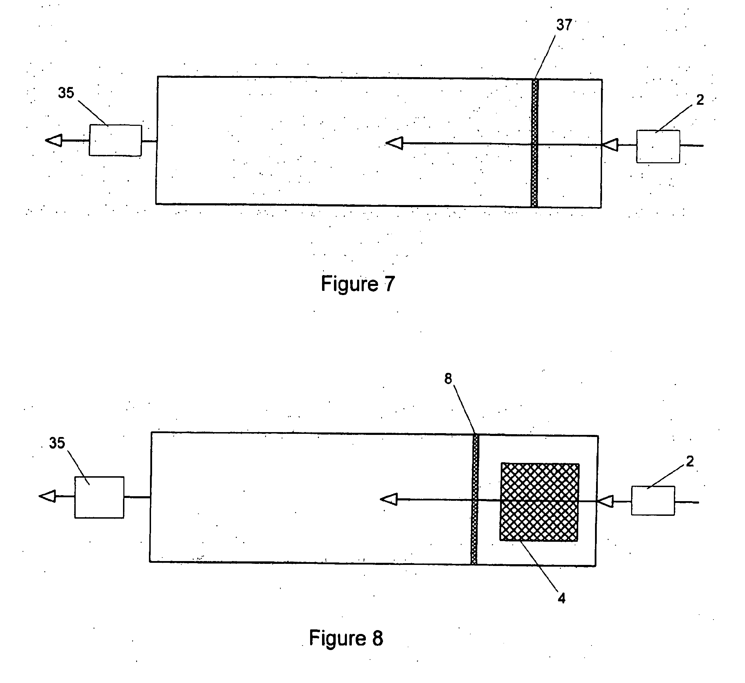

Figure 7 shows the filter system of the prior art. In the prior art fuel passes through an unserviceable filter (37) before going through the other pump elements (22, 23, 24, 25, 26). This filter (37), because it cannot be cleaned or replaced, determines the life of the pump. When the filter (37) is blocked due to incoming debris, the pump can not suck fuel anymore from the system and there is no cure for this. This ends the life of the said pump.

Figure 8 shows the filter system of the current invention. Contrary to the prior art, the inlet filter (4) can be cleaned or replaced when it is blocked by debris. Furthermore, a secondary filter (8) which is placed immediately after the primary filter (4) downstream of the fuel flow makes sure that no debris can creep into the pump during the servicing of the said primary filter (4). As the secondary filter (8) is unreachable by the end user it is impossible to remove it thus making it a vital element for the protection of the pump from mishandling.

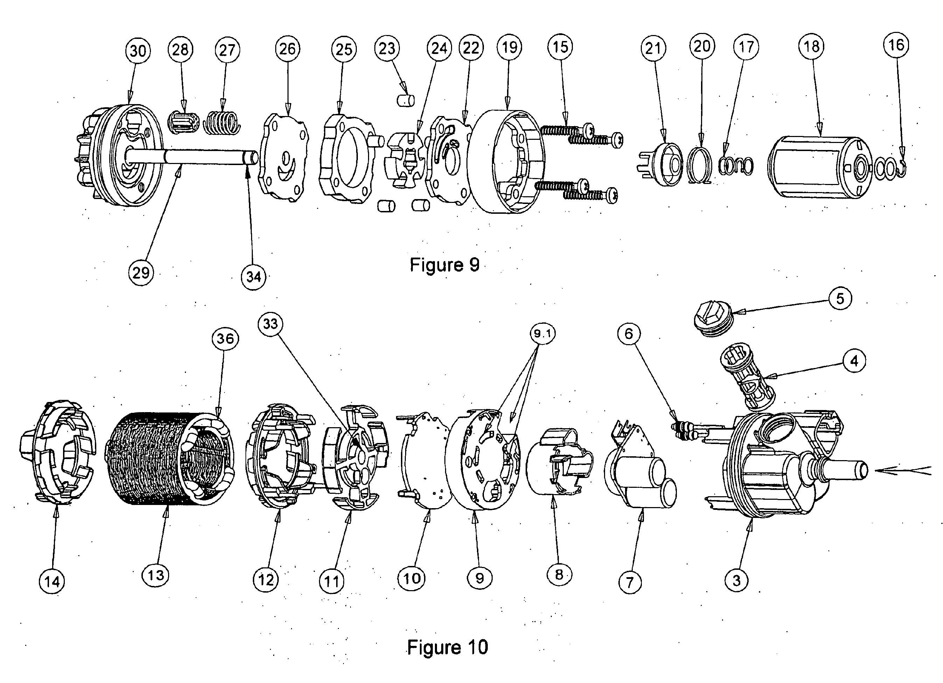

In a preferred driven subassembly shown in figure 9, a moulded pump carrier (30), has a moulded-in shaft (29). Pump elements (22, 23, 24, 25, 26) and spacer (19) are assembled on the pump carrier (30) and tightened by four self tapping screws (15).

Couplings (20, 21) rotatably connect the pump rotor (24) with the magnet rotor (18) on the same fixed shaft (29) to give the magnetic rotor (18) a certain amount of angular backlash so that the magnetic rotor (18) can start against a lower torque under severe conditions like cold jelly fuel or trapped foreign material inside the pump mechanism that requires a higher torque to overcome. Said torsional spring coupling (20) rotatably connecting the magnetic rotor (18) with the pump rotor (24) to recoil when the pump is de-energized thus preparing the said components for the next successful start with backlash and to force the magnetic rotor rotatably backwards towards a position where further successful starts are more likely than a random position. Washers (17) and retainer (16) axially fix all the rotating components on fixed shaft (29).

In the same preferred subassembly, the rotor (24) of the roller vane or other pump is rotatably connected with the rotor (18) of the electric motor by two couplings (20,21). A moulded coupling (21) which has a plurality of extensions is rotatably connected with the pump rotor (24). A torsion spring coupling (20) with formed ends rotatably connects the moulded coupling (21) to the motor rotor (18), so that a flexible torque transmission is obtained.

In a preferred driving subassembly shown in figure 10, the moulded inlet cover (3) is ultrasonically welded to the card housing (9) whereas the card housing (9) is ultrasonically welded to the stator moulded insulator (12) thus forming a rigid block with the stator (13). Centring (11) is placed between the stator moulded insulator (12) and card housing (9) before the two are welded together.

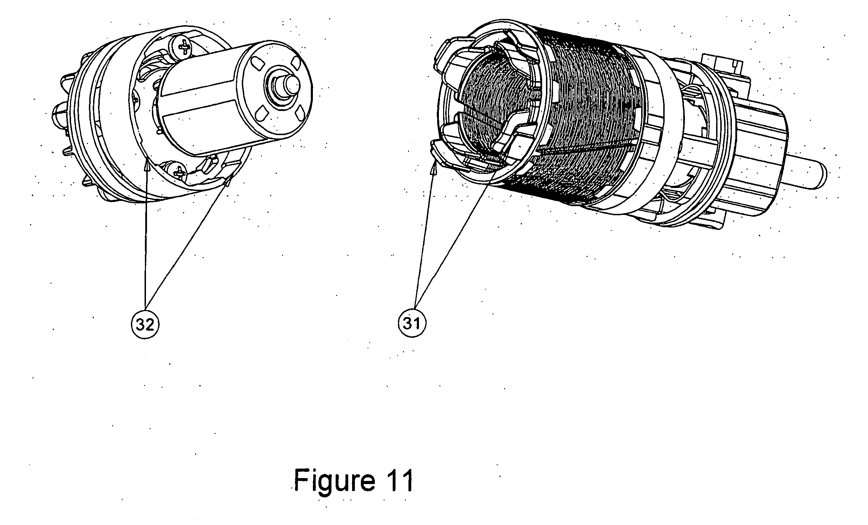

A preferred assembly of the driving and driven subassemblies shown in figure 11 makes use of four cleverly designed protrusions (31) on the stator end insulator (14) of the driving assembly and four indentations (32) on the spacer (19) of the driven assembly to make sure that the two subassemblies are assembled concentrically forming a uniform air gap between stator (13) and rotor (18).

Another preferred assembly of the driving and driven subassemblies makes use of the four protrusions (31) on the stator end insulator (14) and four indentations (32) on the spacer (19) to make sure that the torque between the driving and driven assemblies is met and the two assemblies are prevented from rotating in relation to one another.

Another preferred assembly of the present invention, protrusions (31) and indentations (32) may have different shapes or they may be on opposite parts (protrusions (31) on the spacer (19) and indentations (32) on the stator end insulator (14)).

Another preferred assembly of the driving and driven assemblies makes use of the hole (33) of the centring (11) in figure 10 to fix the free end of the fixed shaft (29) in figure 9 by the extension (34) of the same. When the driving and driven subassemblies are assembled together it is guaranteed that the air gap throughout the whole rotor (18) and stator (13) length is uniform.

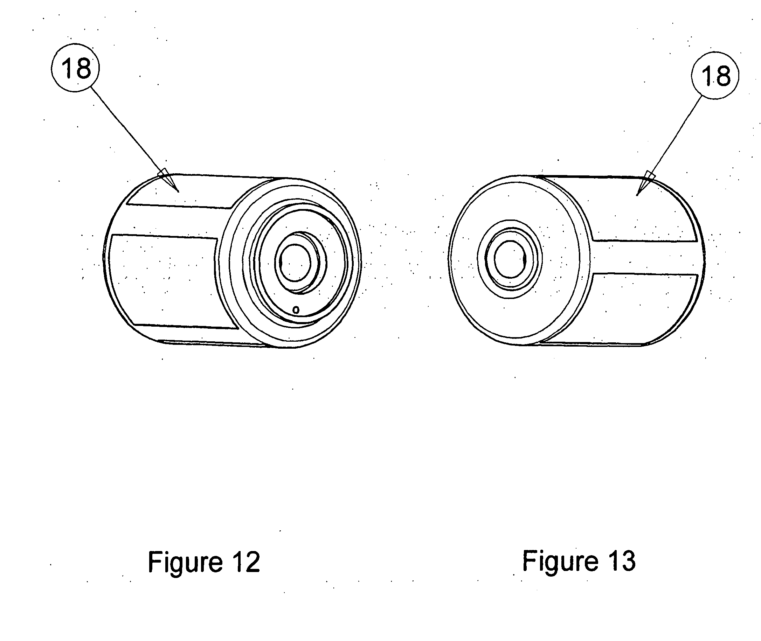

Furthermore, figure 12 and figure 13 are two perspective views of the magnet rotor (18) from different angles. The magnet rotor (18) is built with four magnets placed in an equiangular pattern around a laminated steel core and overmoulded with an engineering plastic which holds all elements together. The preferred overmoulded plastic is so designed that the magnets and plastic overmoulding form an excellent rotary part which has no protrusions or indentations on the outside very similar to an egg. By adopting an egg-like external form the resistance of the fuel on the rotary motion of the magnet rotor (18) under cold jelly conditions has been totally eliminated.

The protective scope of the present application is determined in the part of claims and the scope may by no means be limited to the description above provided only by way of example. It is obvious that a person skilled in the art may also provide the innovative step of the invention using the similar embodiments and/or applies this embodiment to other fields with similar purpose used in the relevant art. Consequently, such embodiments would obviously lack the criteria of innovative step and particularly, not exceeding the known state of the art.

## Claims

1. An electric fuel pump for an internal combustion engine comprising a pump housing (1), a pump carrier (30), a fixed shaft (29) on which all the rotating components are fixed, a rotor (18), a stator (13) and a commutation circuit (10) which energizes the coils (36), **characterized in that** it comprises,
- a single phase brushless dc commutation circuit(10), and **in that** the stator is a single phase stator(13) having n number of poles energised by said single phase commutation circuit(10), and **in that** the pump further comprises a magnet rotor(18) being rotatably driven by said single phase stator(13) and rotatably driving a pumping element, all of which being enclosed in a housing which permits fuel entering from the inlet(2) and leaving from the outlet(35).

2. An electric fuel pump for an internal combustion engine according to Claim 1, **characterized in that** said commutation circuit (10) is placed upstream of the stator coils (36) making it possible for cold incoming fuel to make a more efficient cooling of the commutation circuit (10) and taking the heat generated by said stator coils (36) away from the delicate commutation circuit (10).

3. An electric fuel pump for an internal combustion engine according to Claim 1, **characterized in that** said single-phase commutation circuit (10) coated with a conformal coating varnish which permits very high heat transfer rate not only from metal heat sinks but also from the electronic components' cases.

4. An electric fuel pump for an internal combustion engine according to any of the preceding claims, **characterized in that** said single-phase commutation circuit (10) monitors fuel temperature and responds to subzero temperatures by increasing its power output as the fuel temperature decreases.

5. An electric fuel pump for an internal combustion engine according to any of the preceding claims, **characterized in that** said single-phase stator winding (36) where all winding wire mass is energized in every commutation phase, thus creating a high density power plant with least copper mass as low as 1/2 of a two phase stator and 2/3 of a three-phase stator.

6. An electric fuel pump for an internal combustion engine according to any of the preceding claims, **characterized in** comprising at least one serviceable inlet (primary) filter (4) which conforms to the long life of a brushless dc fuel pump by making it possible to change or wash when blocked by debris.

7. An electric fuel pump for an internal combustion engine according to any of the preceding claims, **characterized in** comprising at least one unserviceable secondary filter (8), downstream of the serviceable primary filter (4), impossible to temper by any means, to hold any debris which may accidentally make its way beyond said primary filter (4) barrier during filter changes thus creating an invincible secondary barrier to protect the delicate pump mechanism and fuel system components.

8. An electric fuel pump for an internal combustion engine according to any of the preceding claims, **characterized in** comprising at least one torsional spring coupling (20) rotatably connecting the magnetic rotor (18) with the pump rotor (24) to give the magnetic rotor (18) a certain amount of angular backlash so that the magnetic rotor (18) can start against a lower torque under severe conditions like cold jelly fuel or trapped foreign material inside the pump mechanism that requires a higher torque to overcome.

9. An electric fuel pump for an internal combustion engine according to claim 8, said torsional spring coupling (20) can be made from variety of materials.

10. An electric fuel pump for an internal combustion engine according to any of the preceding claims, **characterized in** comprising at least one protrusion (31) on the stator end insulator (14) of the driving assembly and at least one indentation (32) on the spacer (19) of the driven assembly to make sure that the two subassemblies are assembled concentrically forming a uniform air gap between stator (13) and rotor (18) and the torque between the driving and driven subassemblies is taken up.

11. An electric fuel pump for an internal combustion engine according to any of the preceding claims, **characterized in** comprising at least one indentation (32) on the stator end insulator (14) of the driving assembly and at least one protrusion (31) on the spacer (19) of the driven assembly to make sure that the two subassemblies are assembled concentrically forming a uniform air gap between stator (13) and rotor (18) and the torque between the driving and driven subassemblies is taken up.

12. An electric fuel pump for an internal combustion engine according to any of the preceding claims, **characterized in** comprising a shaft extension (34) on the fixed shaft (29) and a hole (33) on the centring (11) to make sure that the two subassemblies are assembled concentrically forming a uniform air gap between stator (13) and rotor (18).

13. An electric fuel pump for an internal combustion engine according to any of the preceding claims, **characterized in that** said magnet rotor (18) overmoulded with an engineering plastic which holds all elements together and has no protrusions or indentations on the outside forming an excellent rotary part very similar to an egg.

## Patentansprüche

1. Elektrische Kraftstoffpumpe für eine Verbrennungskraftmaschine, wobei die Pumpe ein Pumpengehäuse (1), einen Pumpenträger (30), eine unbewegliche Welle (29), an der alle sich drehenden Bauteile befestigt sind, einen Läufer (18), einen Ständer (13) und einen Kommutierungskreis (10), der die Spulen (36) erregt, umfasst, **dadurch gekennzeichnet, dass** sie Folgendes umfasst:
- einen bürstenlosen Einphasen-Gleichstrom-Kommutierungskreis (10) und **dadurch**, dass der Ständer ein Einphasenständer (13) ist, der eine Zahl n von Polen hat, die durch den Einphasen-Kommutierungskreis (10) erregt werden, und **dadurch**, dass die Pumpe ferner einen Magnetläufer (18) umfasst, der drehbar durch den Einphasenständer (13) angetrieben wird und drehbar ein Pumpelement antreibt, die alle in einem Gehäuse eingeschlossen sind, das ermöglicht, dass Kraftstoff von dem Einlass (2) eintritt und von dem Auslass (35) austritt.

2. Elektrische Kraftstoffpumpe für eine Verbrennungskraftmaschine nach Anspruch 1, **dadurch gekennzeichnet, dass** der Kommutierungskreis (10) stromaufwärts von den Ständerspulen (36) angeordnet ist, was es möglich macht, das der kalt ankommende Kraftstoff eine wirksamere Kühlung des Kommutierungskreises (10) durchführt und die durch die Ständerspulen (36) erzeugte Wärme von dem empfindlichen Kommutierungskreis (10) wegführt.

3. Elektrische Kraftstoffpumpe für eine Verbrennungskraftmaschine nach Anspruch 1, **dadurch gekennzeichnet, dass** der Einphasen-Kommutierungskreis (10) mit einem konformen Überzugslack überzogen ist, was eine sehr hohe Wärmeübertragungsgeschwindigkeit nicht nur von den Metallkühlkörpern, sondern ebenfalls von den Gehäusen der elektronischen Bauelemente ermöglicht.

4. Elektrische Kraftstoffpumpe für eine Verbrennungskraftmaschine nach einem der vorhergehenden Ansprüche, **dadurch gekennzeichnet, dass** der Einphasen-Kommutierungskreis (10) die Kraftstofftemperatur überwacht und auf Temperaturen unter Null reagiert durch ein Steigern seiner Leistungsabgabe, wenn die Kraftstofftemperatur abnimmt.

5. Elektrische Kraftstoffpumpe für eine Verbrennungskraftmaschine nach einem der vorhergehenden Anspruche, **dadurch gekennzeichnet, dass** die Einphasen-Ständerwicklung (36), bei der in jeder Kommutierungsphase die gesamte Wicklungsmasse erregt wird, folglich eine hochdichte Kraftanlage erzeugt, wobei die geringste Kupfermasse bis zu 1/2 eines Zweiphasen-Standers und 2/3 eines Dreiphasen-Ständers beträgt.

6. Elektrische Kraftstoffpumpe für eine Verbrennungskraftmaschine nach einem der vorhergehenden Ansprüche, **dadurch gekennzeichnet, dass** sie wenigstens einen wartungsfähigen Einlass- (Primär) Filter (4) umfasst, der sich der langen Lebensdauer einer bürstenlosen Gleichstrompumpe **dadurch** anpasst, dass er es möglich macht, ausgetauscht oder ausgewaschen zu werden, wenn er durch Rückstände verstopft ist.

7. Elektrische Kraftstoffpumpe für eine Verbrennungskraftmaschine nach einem der
vorhergehenden Ansprüche, **dadurch gekennzeichnet, dass** sie wenigstens einen nicht wartungsfähigen Sakuadärfilter (8), stromabwärts von dem wartungsfähigen Primärfilter (4), durch keinerlei Mittel zu beeinflussen, umfasst, um jegliche Rückstände zurückzuhalten, die unbeabsichtigt während der Eilterwechsel an der Sperre des Primärfilters (4) vorbeikommen, und folglich eine unüberwindliche sekundäre Sperre zu schaffen, um die empfindlichen Bauteile des Pumpenmechanismus und der Kraftstoffanlage zu schützen.

8. Elektrische Kraftstoffpumpe für eine Verbrennungskraftmaschine nach einem der vorhergehenden Ansprüche, **dadurch gekennzeichnet, dass** sie wenigstens eine Verdrehungsfederkupplung (20) umfasst, die den Magnetläufer (18) mit dem Pumpenrotor (24) verbindet, um dem Magnetläufer (18) ein gewisses Ausmaß an Winkelspiel zu geben, so dass der Magnetläufer (18) unter harten Bedingungen, wie kaltem geleeartigem Kraftstoff oder eingefangenem Fremdmaterial innerhalb des Pumpenmechanismus, die es erfordern, ein höheres Drehmoment zu überwinden, gegen ein niedrigeres Drehmoment starten kann.

9. Elektrische Kraftstoffpumpe für eine Verbrennungskraftmaschine nach Anspruch 8, **dadurch gekennzeichnet, dass** die Verdrehungsfederkupplung (20) aus einer Vielzahl von Werkstoffen hergestellt sein kann.

10. Elektrische Kraftstoffpumpe für eine Verbrennungskraftmaschine nach einem der vorhergehenden Ansprüche, **dadurch gekennzeichnet, dass** sie wenigstens einen Vorsprung (31) an dem Ständerendisolator (14) der Antriebsbaugruppe und wenigstens eine Vertiefung (32) an dem Abstandsstück (19) der Abtriebsbaugruppe umfasst, um sicherzustellen, dass die zwei Unterbaugruppen konzentrisch zusammengebaut werden, wobei ein gleichförmiger Luftspalt zwischen dem Ständer (13) und dem Läufer (18) gebildet wird, und das Drehmoment zwischen der Antriebs- und der Abtriebsbaugruppe aufgenommen wird.

11. Elektrische Kraftstoffpumpe für eine Verbrennungskraftmaschine nach einem der vorhergehenden Ansprüche, **dadurch gekennzeichnet, dass** sie wenigstens eine Vertiefung (32) an dem Ständerendisolatnr (14) der Antriebsbaugruppe und wenigstens einen Vorsprung (31) an dem Abstandsstück (19) der Abtriebsbaugruppe umfasst, um sicherzustellen, dass die zwei Unterbaugruppen konzentrisch zusammengebaut werden, wobei ein gleichförmiger Luftspalt zwischen dem Ständer (13) und dem Läufer (18) gebildet wird, und das Drehmoment zwischen der Antriebs- und der Abtriebsbaugruppe aufgenommen wird.

12. Elektrische Kraftstoffpumpe für eine Verbrennungskraftmaschine nach einem der vorhergehenden Ansprüche, **dadurch gekennzeichnet, dass** sie eine Wellenverlängerung (34) an der unbeweglichen Welle (29) und ein Loch (33) an der Zentrierung (11) umfasst, um sicherzustellen, dass die zwei Unterbaugruppen konzentrisch zusammengebaut werden, wobei ein gleichförmiger Luftspalt zwischen dem Ständer (13) und dem Läufer (18) gebildet wird.

13. Elektrische Kraftstoffpumpe für eine Verbrennungskraftmaschine nach einem der vorhergehenden Ansprüche, **dadurch gekennzeichnet, dass** der Magnetläufer (18) mit einem technischen Kunststoff überformt ist, der alle Elemente zusammenhält und auf der Außenseite keine Vorsprünge oder Vertiefungen hat, wobei er ein ausgezeichnetes Rotationsteil bildet, das einem Ei sehr ähnelt.

## Revendications

1. Pompe à carburant électrique destinée à un moteur à combustion interne comprenant un logement de pompe (1), un support de pompe (30), un arbre fixe (29) sur lequel tous les composants rotatifs sont fixés, un rotor (18), un stator (13) et un circuit de commutation (10) qui excite les bobines (36), **caractérisée en ce que** elle comprend,
- un circuit de commutation cd sans balais monophasé (10), et **en ce que** le stator est un stator monophasé (13) comportant un nombre n de pôles excités par ledit circuit de commutation monophasé (10), et **en ce que** la pompe comprend en outre un rotor d'aimant (18) étant entraîné rotativement par ledit stator monophasé (13) et entraînant rotativement un élément de pompage, étant tous renfermés dans un logement qui permet au carburant d'entrer par l'entrée (2) et de sortir par la sortie (35).

2. Pompe à carburant électrique destinée à un moteur à combustion interne selon la revendication 1, **caractérisée en ce que** ledit circuit de commutation (10) est placé en amont des bobines de stator (36) ce qui permet au carburant froid entrant de refroidir plus efficacement le circuit de commutation (10) et d'éloigner du circuit de commutation délicat (10) la chaleur générée par lesdites bobines de stator (36).

3. Pompe à carburant électrique destinée à un moteur à combustion interne selon la revendication 1, **caractérisée en ce que** ledit circuit de commutation monophasé (10) est revêtu d'un vernis de revêtement conforme qui permet un très haut transfert de chaleur non seulement hors des dissipateurs thermiques métalliques mais aussi hors des boîtiers des composants électroniques.

4. Pompe à carburant électrique destinée à un moteur à combustion interne selon une quelconque des revendications précédentes, **caractérisé en ce que** ledit circuit de commutation monophasé (10) surveille la température du carburant et répond à des températures inférieures à zéro en augmentant son rendement de puissance à mesure que la température du carburant diminue.

5. Pompe à carburant électrique destinée à un moteur à combustion interne selon une quelconque des revendications précédentes, **caractérisée en ce que** ledit enroulement de stator monophasé (36), où la totalité de la masse de fil de l'enroulement est excitée dans chaque phase de commutation, en créant ainsi une installation motrice à haute densité avec une masse de cuivre au moins aussi minime que d'un stator biphasé et 2/3 d'un stator triphasé.

6. Pompe à carburant électrique destinée à un moteur à combustion interne selon une quelconque des revendications précédentes, **caractérisée en ce que** elle comprend au moins un filtre (primaire) d'entrée (4) en état de service qui se conforme à la longue durée de vie d'une pompe à carburant cd sans balais en permettant un remplacement ou un lavage lors d'un blocage par des débris.

7. Pompe à carburant électrique destinée à un moteur à combustion interne selon une quelconque des revendications précédentes, **caractérisée en ce que** elle comprend au moins un filtre secondaire hors service (8), en aval du filtre primaire en état de service (4), impossible à tempérer par un quelconque moyen, afin de contenir tous débris qui pourraient accidentellement s'infiltrer au-delà de ladite barrière de filtre primaire (4) pendant les remplacements de filtre, en créant ainsi une barrière secondaire invincible pour protéger le mécanisme de pompe délicat et les composants du système de carburant.

8. Pompe à carburant électrique destinée à un moteur à combustion interne selon une quelconque des revendications précédentes, **caractérisée en ce que** elle comprend au moins un couplage à ressert de torsion (20) raccordant rotativement le rotor magnétique (18) au rotor de pompe (24) afin de donner au rotor magnétique (18) une certaine proportion de jeu angulaire, de sorte que le rotor magnétique (18) puisse démarrer malgré un couple inférieur dans des conditions critiques comme du carburant gelé froid ou une matière étrangère piégée à l'intérieur du mécanisme de pompe qui nécessite de surmonter un couple supérieur.

9. Pompe à carburant électrique destinée à un moteur à combustion interne selon la revendication 8, ledit couplage à ressort de torsion (20) pouvant être fabriqué dans une variété de matériaux.

10. Pompe à carburant électrique destinée à un moteur à combustion interne selon une quelconque des revendications précédentes, **caractérisée en ce que** elle comprend au moins une protubérance (31) sur l'isolant d'extrémité de stator (14) de l'ensemble entraîneur et au moins un renfoncement (32) sur l'entretoise (19) de l'ensemble entraîné afin de garantir que les deux sous-ensembles sont assemblés concentriquement en formant un entrefer uniforme entre le stator (13) et le rotor (18) et le couple entre les sous-ensembles entraînant et entraîné est absorbé.

11. Pompe à carburant électrique destinée à un moteur à combustion interne selon une quelconque des revendications précédentes, **caractérisée en ce que** elle comprend au moins un renfoncement (32) sur l'isolant d'extrémité de stator (14) de l'ensemble entraînant et au moins une protubérance (31) sur l'entretoise (19) de l'ensemble entraîné afin de garantir que les deux sous-ensembles sont assemblés concentriquement en formant un entrefer uniforme entre le stator (13) et le rotor (18) et le couple entre les sous-ensembles entraînant et entraîné est absorbé.

12. Pompe à carburant électrique destinée à un moteur à combustion interne selon une quelconque des revendications précédentes, **caractérisée en ce que** elle comprend une extension d'arbre (34) sur l'arbre fixe (29) et un trou (33) sur le centrage (11) afin de garantir que les deux sous-ensembles sont assemblés concentriquement en formant un entrefer uniforme entre le stator (13) et le rotor (18).

13. Pompe à carburant électrique destinée à un moteur à combustion interne selon une quelconque des revendications précédentes, **caractérisée en ce que** ledit rotor magnétique (18) est surmoulé avec un plastique haute performance qui solidarise tous les éléments et ne comporte pas de protubérances ou de renfoncements sur l'extérieur formant une excellente pièce rotative très similaire à un oeuf.
